(19) Europäisches Patentamt
European Patent Office
Office européen des brevets

(11) **EP 4 290 071 A1**

(12) **EUROPEAN PATENT APPLICATION**

(43) Date of publication:
**13.12.2023 Bulletin 2023/50**

(21) Application number: **22382555.5**

(22) Date of filing: **09.06.2022**

(51) International Patent Classification (IPC):
**F03D 3/06** *(2006.01)*  **F03D 13/25** *(2016.01)*

(52) Cooperative Patent Classification (CPC):
**F03D 3/064; F03D 3/068; F03D 13/25;**
B63B 2035/446; F05B 2240/3052; F05B 2240/93;
F05B 2240/95

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Seaquenz SL**
**01005 Vitoria-Gasteiz (ES)**

(72) Inventors:
• **OCHOA DE ERIBE MARTÍNEZ, Xabier**
**01008 VITORIA-GASTEIZ (ES)**
• **BITTEL, Nele Johanna**
**64367 Mühltal (DE)**
• **WEHRLE, Rainer Christopher**
**82229 Seefeld (DE)**

(74) Representative: **Igartua, Ismael**
**Galbaian S. Coop.**
**Garaia Parke Teknologikoa**
**Goiru Kalea 1**
**20500 Arrasate-Mondragón (ES)**

(54) **FLOATING VERTICAL OFFSHORE WIND TURBINE WITH COMPENSATION SYSTEM AND METHOD TO PREVENT THE OVERTURNING OF SAID FLOATING WIND TURBINE**

(57) Vertical axis floating offshore wind-powered generator (100) comprising a wind turbine (1) arranged on a floating platform (2), and a method for stabilizing the floating platform (2) of said wind-powered generator (100). The wind turbine (1) comprises a plurality of blades (3) rotating about a vertical shaft (4), each blade (3) being attached to the vertical shaft (4) through at least one attachment arm (5). The floating wind-powered generator (100) also comprises a compensation system which reduces a bending moment transferred to the floating platform (2) as a result of the force exerted by the wind on the blades (3). The compensation system comprises at least one compensating device (6) associated with a blade (3), each compensating device (6) being arranged in an attachment arm (5). Each compensating device (6) comprises a moving element (6.1) which is configured for redirecting a surrounding air enveloping the wind turbine (1) and which generates, by way of reaction, a force causing a compensation moment on the floating platform (2) which counteracts the bending moment generated by the force exerted by the wind on the blades (3), thereby successfully increasing the stability of the floating platform (2).

Fig. 1

**EP 4 290 071 A1**

## Description

TECHNICAL FIELD

The present invention relates to vertical axis floating offshore wind-powered generators comprising a compensation system.

PRIOR ART

Floating offshore wind-powered generators, whether VAWT (vertical-axis wind turbine) or HAWT (horizontal-axis wind turbine), comprise a wind turbine which is supported on a floating platform. Said floating platform is usually anchored to the seabed, but it can, however, pitch or roll due to the impact of waves and the forces induced by the action of wind.

Wind turbines comprise a plurality of blades which rotate as a result of the force exerted by wind thereon. As they move in circles, the blades cause the rotation of a shaft which cooperates with a generator converting said rotational energy into electricity, which can be used directly in real time or stored in a battery bank to be utilized later.

In horizontal-axis turbines the blades rotate about an horizontal axis, whereas in vertical-axis turbines the blades rotate about a vertical axis, with the blades usually being arranged parallel to the vertical axis. Said axis is located transversely with respect to the wind in vertical turbines. In an onshore wind-powered generator, the axis will always be in a vertical position in vertical turbines (according to a Cartesian coordinate system), but in a floating offshore wind turbine, due to the impact of waves and the pitching and rolling movement of the floating platform, the axis in use will not always be in the vertical position (according to said Cartesian system), however, in order to better understand the invention, the vertical axis wind-powered generator nomenclature will be maintained throughout the description.

In the case of floating offshore vertical turbines, a bending moment which tends to destabilize the floating platform is generated on the floating platform due to the forces exerted by the wind on the blades of the wind turbine, where the floating platform may even be overturned. Said bending moment includes a pitching moment which tends to destabilize the platform in the direction in which the wind blows and a rolling moment which tends to destabilize the platform in a perpendicular direction. Generally, the floating platforms of wind-powered generators are often oversized in order to absorb said bending moment and thereby prevent the wind turbine from overturning.

Moreover, wind turbines also usually comprise stopping means to stop the turbine on purpose when the wind whips with great force in order to protect the generator and the structure of the wind turbine that are often designed to rotate up to a critical speed on one hand and to prevent the wind-powered generator from overturning on the other.

In this sense, CN107842462 A describes a vertical axis floating offshore wind-powered generator comprising a wind turbine comprising a plurality of blades rotating about a vertical shaft and a floating platform on which sits the wind turbine. The blades comprise a moving element which is activated when the wind turbine is to be stopped so as not to exceed the critical speed of the generator when the wind is very strong, for example. When the wind-driven rotating blades rotate at a speed close to the critical rotational speed of the generator, the moving element of each blade is activated, pivoting with respect to a segment of the blade, in order to stop the rotation of the blades.

DISCLOSURE OF THE INVENTION

An object of the invention is to provide a vertical axis floating offshore wind-powered generator, as defined in the claims.

Another object of the invention is to provide a method to stabilize the floating platform of a floating vertical-axis wind-powered generator.

The floating vertical axis offshore wind-powered generator of the invention comprises a wind turbine arranged on a floating platform. Said wind turbine comprises a plurality of blades rotating about a vertical shaft, each blade being attached to the vertical shaft through at least one attachment arm. The floating wind-powered generator also comprises a compensation system which reduces a bending moment transferred to the floating platform as a result of the force exerted by the wind on the blades. The compensation system comprises at least one compensating device associated with a blade, each compensating device being arranged in an attachment arm. Each compensating device comprises a moving element.

In the method of the invention, said moving element is activated to deflect a surrounding air enveloping the wind turbine and directed along the attachment arm when said attachment arm is rotating about the vertical shaft, such that said deflection causes, by way of reaction, an aerodynamic force which generates a compensation moment on the floating platform which counteracts the bending moment generated by the force exerted by the wind on the blades, thereby successfully increasing the stability of the floating platform.

With the vertical axis floating offshore wind-powered generator and the method of the invention, the stability of the floating platform is therefore successfully increased in a safe and efficient manner, without having to oversize said floating platform, which entails a significant material savings, and therefore a significant cost savings. By increasing the stability of the floating platform, the maximum pitching limit that can be withstood by the floating platform can be increased, thereby reducing the risk of the wind turbine of the invention overturning. Furthermore, the wind-powered generator of the invention fully utilizes the rotational energy of the blades due to the wind, given that the wind-powered generator does not have to be stopped on purpose to prevent it from overturning, thereby obtaining a more efficient wind turbine.

These and other advantages and features of the invention will become apparent in view of the figures and detailed description of the invention.

DESCRIPTION OF THE DRAWINGS

Figure 1 shows a perspective view of an embodiment of the vertical axis floating offshore wind-powered generator according to the invention.

Figure 2 shows a front view of the wind-powered generator of Figure 1.

Figure 3 shows a perspective view of another embodiment of the floating offshore wind-powered generator according to the invention.

Figure 4 schematically shows the wind striking the wind-powered generator of Figure 1.

Figures 5 and 6 schematically show the influence of the wind for generating the bending moment which tends to destabilize the floating platform.

Figure 7 schematically shows the influence of the moving elements of the compensation system of the wind-powered generator of Figure 1 for generating the compensation moment which counteracts the bending moment generated by the force exerted by the wind on the blades.

Figure 8 shows a cross-section of the airfoil of one of the blades of the wind-powered generator of Figure 1.

Figure 9 shows a detail of the segment of the attachment arm comprising the compensating device, with the moving element of said compensating device being in the elevated position.

Figure 10A shows a perspective view of a cross-section of the airfoil of the segment of the attachment arm comprising the compensating device of one of the blades of the wind-powered generator of Figure 1, with the moving element of the compensating device being in the elevated position.

Figure 10B shows a perspective view of a cross-section of the airfoil of the segment of the attachment arm of Figure 10A, but with the moving element of the compensating device being in the lowered position.

tion.

Figure 10C shows the cross-section of the airfoil of the segment of the attachment arm of Figure 10A, but with the moving element of the compensating device being in the resting position.

Figure 11 schematically shows the different positions of the moving element arranged in an attachment arm according to the different azimuth positions of the blade with which said moving element is associated.

Figure 12 schematically shows the influence of the relative speed generated between the surrounding air enveloping the wind turbine and an attachment arm of the wind-powered generator of Figure 1.

DETAILED DISCLOSURE OF THE INVENTION

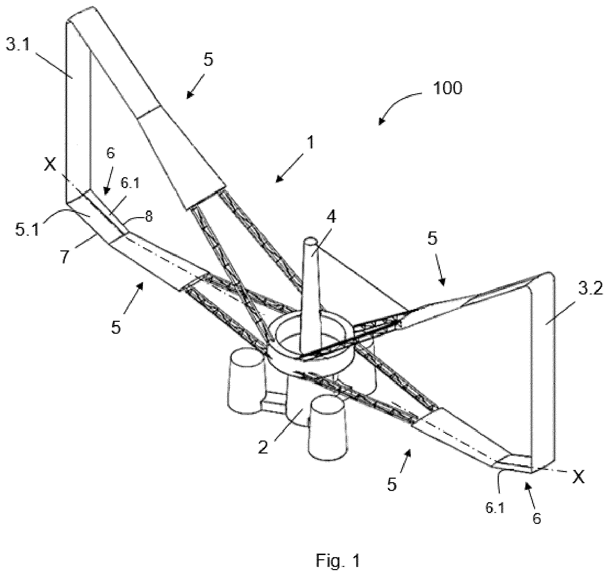

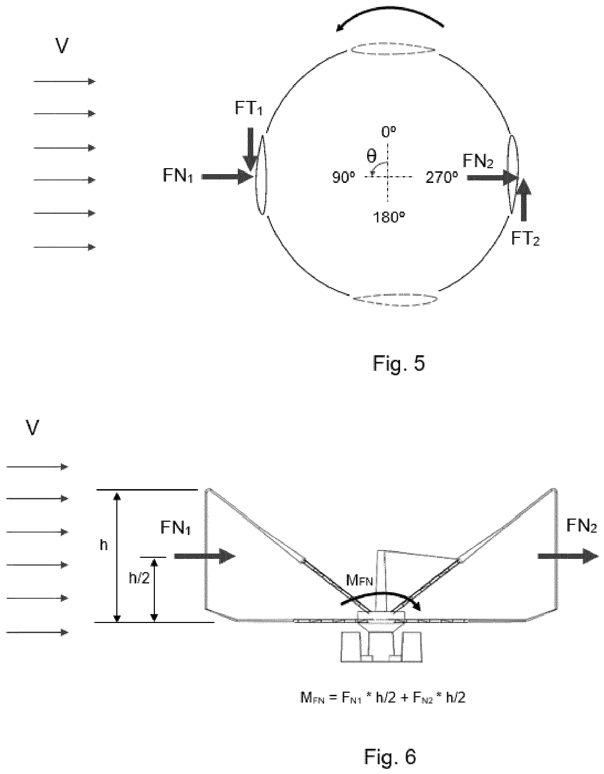

Figure 1 shows an embodiment of the floating offshore wind-powered generator 100 according to the invention which is found in the sea. The wind-powered generator 100 comprises a wind turbine 1 arranged on a floating platform 2. Said wind turbine 1 comprises a plurality of blades 3 rotating about a vertical shaft 4 driven by the wind V, each blade 3 being attached to the vertical shaft 4 through at least one attachment arm 5. The vertical shaft 4 is located transversely with respect to the wind, as can be seen, for example, in Figure 6.

In an onshore vertical-axis wind-powered generator or in an offshore vertical-axis fixed-bottom wind-powered generator, the axis of rotation of the blades is always in a vertical position (taking a Cartesian coordinate system as a reference), but in a floating offshore wind turbine, due to the impact of waves and the rolling of the floating platform due to a pitching and rolling movement caused by the influence of the wind V, the axis in use will not always be in the vertical position (according to said Cartesian system), however, in order to better understanding of the invention, the vertical-axis wind-powered generator nomenclature will be maintained throughout the description, where vertical is understood to mean transverse to the direction of the wind V and normal to the plane of the sea. In the context of the invention, it is understood that the pitching movement of the floating platform occurs in the direction of the wind V, i.e., such that the floating platform 2 pitches according to an angular movement about an imaginary axis which is perpendicular to the direction of the wind V and coplanar with a plane parallel to the plane of the sea, whereas the rolling movement occurs in a perpendicular direction, i.e., such that the floating platform 2 rolls about another imaginary axis which is parallel to the direction of the wind V and coplanar with a plane parallel to the plane of the sea.

The wind-powered generator 100 of the invention shown in Figure 1 comprises two blades 3 configured for rotating counterclockwise about said vertical shaft 4 driven by the wind V, as depicted in the diagram of Figure 5, with said blades 3 facing and being parallel to the vertical shaft 4, i.e., the longitudinal axis of the blades 3 is parallel to the vertical shaft 4. However, the number of blades 3 does not change the concept of the invention. To better understand the invention, one of the blades has been identified in the drawings with the number 3.1 and the other with the number 3.2. If there were more blades, they would be identified successively with the numbers 3.3, 3.4, etc. Likewise, in the preferred embodiment of the invention, each blade 3 is attached to the vertical shaft 4 through two attachment arms 5, as shown in Figure 1, but the number of attachment arms 5 per blade 3 also does not change the concept of the invention.

The wind-powered generator 100 of the invention also comprises a compensation system which increases the stability of the floating platform 2, furthermore reducing the risk of the floating platform 2 overturning without having to oversize said floating platform 2. Overturning may occur as a result of a bending moment $M_{FN}$ generated by the force exerted by the wind on the blades 3 and transferred to the floating platform 2. Due to impact of waves and said bending moment $M_{FN}$, the floating platform 2 is subjected to a pitching movement (in the direction of the wind) and a rolling movement (perpendicular to the pitching movement), therefore, the purpose of the invention is to make the wind-powered generator 100 capable of maintaining verticality without rolling excessively or overturning, without oversizing the floating platform 2. In the context of the invention, said bending moment $M_{FN}$ includes a pitching moment which tends to destabilize the floating platform 2 in the direction in which the wind V blows, and/or a rolling moment which tends to destabilize the floating platform 2 in a perpendicular direction.

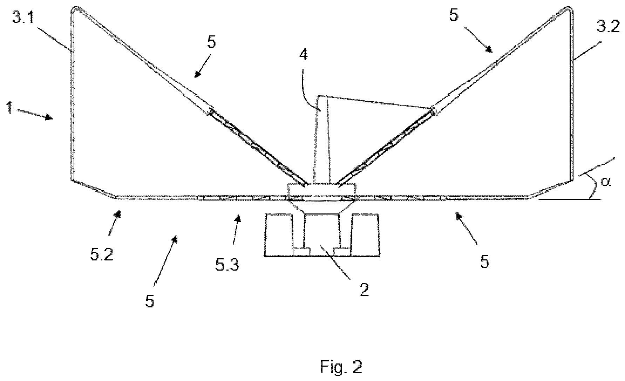

Generally, the attachment arms closest to the sea surface, these arms being very close to the water, tend to have a segment (close to the blade) with a safety angle $\alpha$, i.e., inclined so as to distance it from the water, as can be seen for example in Figure 2, thereby preventing both the attachment arm and the lower part of the blade (the elements farthest away from the vertical shaft) from coming into contact with the water during the pitching and/or rolling of the floating platform. The greater the rolling movement of the floating platform is, the closer the floating platform is to its stability limit and the greater the risk of the wind-powered generator collide with the sea water, and therefore the safety angle $\alpha$ which enables the inclination of the segment of the attachment arm closest to the blade will be greater. Therefore, with the compensation system of the invention, the wind-powered generator 100 is more secure since it is possible to stabilize the floating platform 2. Since the pitching and rolling are kept under control, the risk of collision with the water is lower, the lower attachment arms 5 thus being able to be moved towards the sea surface, where the described safety angle $\alpha$ may even be reduced. Moreover, the tasks of maintaining and repairing the wind-powered generator 100 are made easier the closer the attachment arms 5 are to the water level.

The compensation system of the invention comprises at least one compensating device 6 which is associated with a blade 3. In the preferred embodiment of the invention, each blade 3 has associated therewith at least one compensating device 6, each compensating device 6 being arranged in an attachment arm 5. With this configuration, a wind-powered generator 100 with a redundant compensation system is obtained given that, although the wind-powered generator 100 can work with a single compensating device 6, more than one compensating device 6 is provided so that the wind-powered generator 100 does not have to be shut down in the event of one of the compensating devices 6 breaking down so as to safeguard the safety of the wind-powered generator 100.

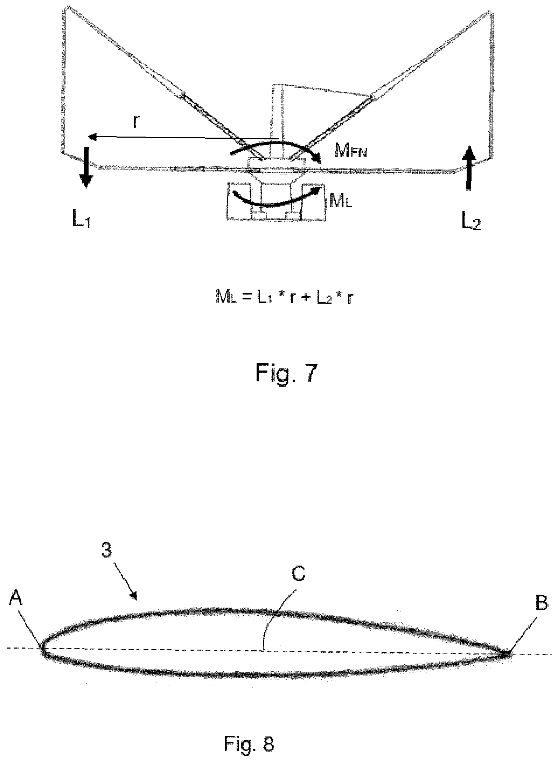

Each compensating device 6 comprises a moving element 6.1, such that when said moving element 6.1 is activated, a relative speed R generated between a surrounding air enveloping the wind turbine 1 (regardless of whether there is wind) and the moving element 6.1 leads to a change in direction of said air which moves over the surface of the corresponding attachment arm 5, generating a force in the opposite direction by way of reaction, as will be described in more detail below, contributing to a compensation moment $M_L$ being generated on the floating platform 2 which counteracts the bending moment $M_{FN}$ generated by the force exerted by the wind V on the blades 3, as can be seen schematically in Figure 7, thereby increasing the stability of the floating platform 2 without oversizing said floating platform 2. Therefore, the stability limit in the pitching and/or rolling movements of the floating platform 2 is increased and the risk of the floating platform 2 overturning is reduced, obtaining a safer, more cost-effective, and efficient wind-powered generator 100.

The blades 3 of the wind-powered generator 100 of the invention, as well as most of the blades of the wind-powered generator of the state of the art, comprise a airfoil, such as the one shown in Figure 8, for example, the airfoil being the most preferred due to its aerodynamic properties. Airfoils comprise a leading edge A and a trailing edge B, with the straight line joining the leading edge A and the trailing edge B being referred to as chord C. The leading edge A is the usually rounded area which faces the wind V, and the trailing edge B is the usually sharp, opposite end. Air current is usually split at the leading edge A and brought together again at the trailing edge B.

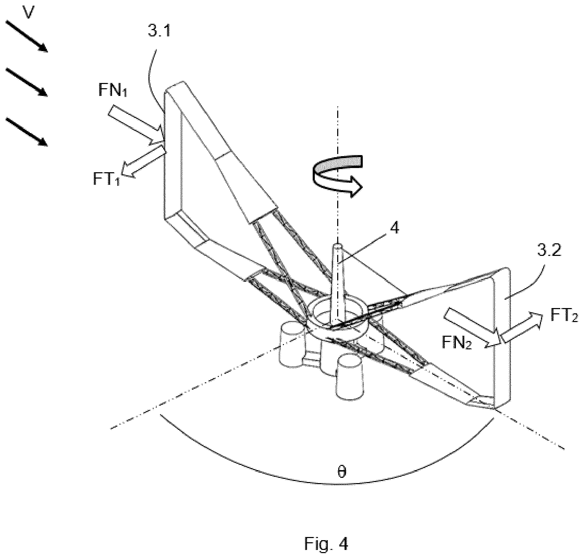

Taking this into account, and as schematically shown in Figures 4 and 5, the relative speed of the wind V whipping each moving blade 3 generates a resulting force on said blade 3 which breaks down into a tangential force $F_T$ and a normal force $F_N$, as schematically depicted in Figure 4. The tangential force $F_T$ is aligned with the direction of rotation of the blade 3 and is the force which contributes to driving and maintaining the rotational movement of the blades 3, and therefore generating the desired electric power. The greater said normal force $F_T$ is, the greater the electric power generated will be, and therefore the wind-powered generator will be more efficient. However, the normal force $F_N$ is a normal force with respect to the corresponding blade 3 which tends to destabilize the floating platform 2, where the floating platform 2 can even be overturned in the direction in which the wind V acts, as depicted in the diagram of Figure 6. Both forces $F_T$ and $F_N$ are related to one another, i.e., if one increases, the other also increases, and vice versa.

The blades 3 of the wind-powered generator 100 of the invention have a height h. The resulting normal force caused by the wind V on each blade 3 is applied at about mid-height of the corresponding blade 3, so each blade 3 generates a pitching moment which is transferred to the floating platform 2 and/or a rolling moment which is also transferred to the floating platform 2. The bending moment $M_{FN}$ produced by each blade 3 as a result of the action of the wind V acts on an imaginary axis coplanar with a plane parallel to the plane of the sea, located at the attachment point between the wind turbine 1 and the floating platform 2, being perpendicular to the direction of the normal force $F_N$, and rotating integrally with the corresponding blade 3 with respect to the vertical rotating shaft 4 of the wind turbine 1, such that the moment transferred to the floating platform 2 can be broken down into a pitching component and a rolling component. The pitching component is the most important, and to that end, for easy understanding of the invention, Figure 6 depicts the instant in which the bending moment $M_{FN}$ is purely a pitching component, with the rolling component thereof being null or negligible in that instant. In the non-limiting example of the invention in which the wind-powered generator 100 comprises two blades 3, as shown in Figure 1, the resulting bending moment $M_{FN}$ acting on the floating platform 2 is the sum of the bending moments associated with each blade 3, as can be seen in Figure 6:

$$M_{FN} = F_{N1} * h/2 + F_{N2} * h/2$$

With the vertical axis floating offshore wind-powered generator 100 and the method of the invention, it is possible to stabilize the floating platform 2, as mentioned, without oversizing said floating platform 2, reducing the risk of the wind-powered generator 100 overturning. Furthermore, the wind-powered generator 100 of the invention fully utilizes the rotational energy of the blades 3 due to the wind V, given that the wind-powered generator 100 does not have to be intentionally stopped in order to prevent it from overturning, thereby obtaining a more efficient wind turbine 1 as it allows fully utilizing wind energy to obtain as much electric power as possible without compromising on safety of the wind-powered generator 100.

With the wind turbine 1 in motion, the moving element 6.1 of each compensating device 6, when activated, leads to the relative speed generated between the corresponding attachment arm 5 and the surrounding air enveloping the wind turbine 1, regardless of whether or not there is wind, causing an aerodynamic force, as will be described in more detail below, the vertical component L of which, parallel to the vertical shaft 4, is directed in the direction opposite the direction of movement of the moving element 6.1. As schematically observed in Figure 7, the vertical component of said aerodynamic force L generates the compensation moment $M_L$ on the floating platform 2 which counteracts both the pitching moment generated by the force exerted by the wind V on the blades 3 and the rolling moment to which the floating platform 2 is subjected, reducing the impact generated by the bending moment $M_{FN}$ on the floating platform 2, as schematically shown in Figure 7, even drastically reducing the risk of the wind turbine 100 overturning without having to oversize the floating platform 2.

In the non-limiting example of the invention, the compensating device 6 associated with each blade 3 is arranged at the end of the attachment arm 5 closest to the respective blade 3, as can be seen in Figures 1 or 7, such that distance r with respect to the vertical shaft 4 is the largest possible, with said respective blade 3 preferably being the one closest to the sea surface, thereby benefitting from the aerodynamic efficiency caused by the ground effect, given the small distance to the sea surface. Furthermore, the wind turbine 1 being close to the sea surface facilitates, for example, the tasks of maintaining, repairing, and cleaning the wind-powered generator 100.

In the non-limiting example of the invention in which the floating offshore wind-powered generator 100 comprises two blades 3, as shown in Figure 1, the resulting compensation moment $M_L$ obtained is the sum of the compensation moments associated with each compensating device 6.1, summarized according to the following formula, as shown in Figure 7:

$$M_L = L_1 * r + L_2 * r$$

The direction of the compensation moment $M_L$ is opposite the direction of the bending moment $M_{FN}$, and therefore, both moments are subtracted.

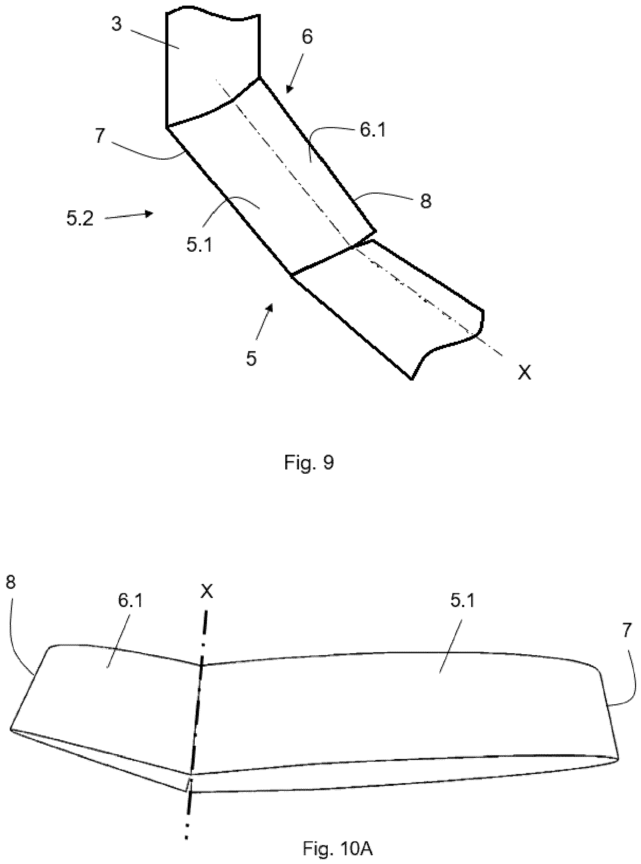

In the preferred embodiment of the invention, the moving element 6.1 of the corresponding compensating device 6 pivots with respect to a longitudinal axis X of the corresponding attachment arm 5, as can be seen in the detail of Figure 9.

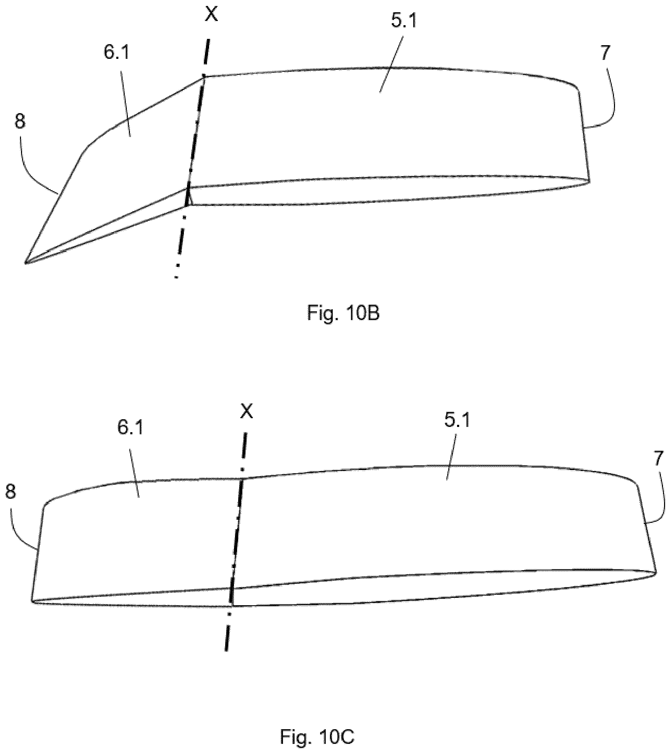

The compensating device 6 associated with a respective blade 3 is arranged in a segment 5.2 of the corresponding attachment arm 5, said segment 5.2 comprising a support 5.1 integral with the rest of the attachment arm 5, as shown in the detail of Figure 9, and the moving element 6.1, said moving element 6.1 being pivotably attached with said support 5.1, as shown in Figures 9, 10A, or 10B.

In the preferred embodiment of the invention, at least the segment 5.2 of the attachment arm 5 comprising the compensating device 6 has an airfoil, where it may or may not be similar to the airfoil of the blade 3 with which it is associated, thereby improving the aerodynamic efficiency of the attachment arm 5, and accordingly of the wind-powered generator 100. Like the airfoil of the blade 3, the airfoil of the segment 5.2 of the attachment arm 5 also comprises a leading edge 7 and a trailing edge 8, the leading edge 7 being comprised in the support 5.1 of said segment 5.2, and the trailing edge 8 being comprised in the moving element 6.1, as can be seen in Figures 9, 10A, or 10B, such that the moving element 6.1 is part of the attachment arm 5.

In an embodiment not shown in the drawings, each attachment arm 5 has an airfoil along the entire length thereof, i.e., from the vertical shaft 4 to the corresponding blade 3. However, in the preferred embodiment of the invention, each attachment arm 5 also comprises, in addition to the segment 5.2 with the airfoil, another segment 5.3 with a structure different from the airfoil such as, for example, a lattice structure, as shown in Figure 1 or 2. This configuration allows providing the wind-powered generator 100 with a more resistant system that is easier to assemble without compromising the aerodynamic advantages afforded by the airfoils.

In the preferred embodiment of the invention, the moving element 6.1 of each compensating device 6 can be arranged in a resting position in which said moving element 6.1 is aligned with the attachment arm 5, and more specifically with the support 5.1 of the segment 5.2 of the attachment arm 5, as shown in Figure 10C, in an elevated position in which the moving element 6.1 is away from the sea surface, such that the moving element 6.1 projects above the attachment arm 5, more specifically the support 5.1 of the segment 5.2, as shown in Figure 10A, and a lowered position in which the moving element 6.1 approaches the sea surface, such that the moving element 6.1 projects below the attachment arm 5, more specifically the support 5.1 of the segment 5.2, as can be seen in Figure 10B.

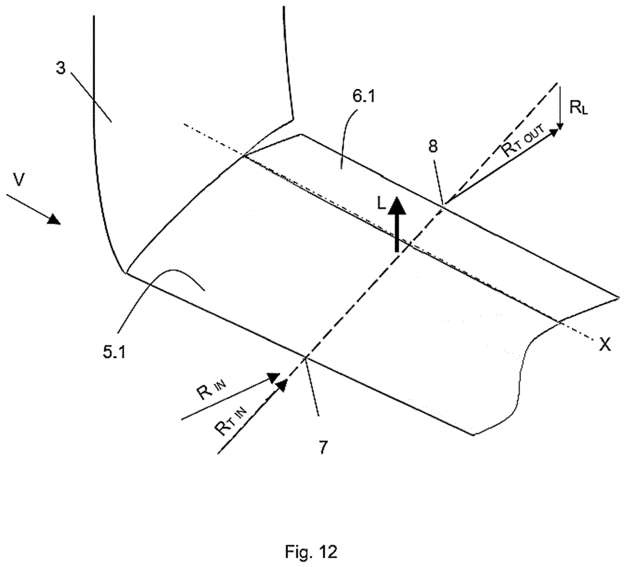

The leading edge 7 of the airfoil of the attachment arm 5 comprising the compensating device 6 is arranged facing the tangential component $R_T$ of the relative speed R of the surrounding air enveloping the wind turbine 1 and generated between the corresponding attachment arm 5 and said surrounding air when the wind turbine 1 is moving driven by the wind V, as schematically shown in Figure 12. The tangential movement of the relative speed R corresponds with the direction of the chord of the airfoil of the attachment arm 5, i.e., with the direction that the chord would adopt if the moving element 6.1 of the corresponding compensating device 6 were in the resting position. The surrounding air is directed along the airfoil surface of the support 5.1 of the segment 5.2 such that, with the moving element 6.1 in the elevated position, it deflects part of said surrounding air, i.e., it diverts part of the surrounding air in the upward direction of the moving element 6.1, which causes, by way of reaction, the aerodynamic force L in the opposite direction, with the vertical component (parallel to the vertical shaft 4) of said aerodynamic force L being directed in this case towards the sea surface. Similarly, when the moving element 6.1 is in the lowered position, part of the surrounding air flowing over the surface of the airfoil of the support 5.1 of the segment 5.2 is deflected in the downward direction of the moving element 6.1, as can be seen in Figure 12, generating, by way of reaction, the aerodynamic force L in the opposite direction, with the vertical component L of said aerodynamic force being directed away from the sea surface in the example of Figure 12. The vertical component L of the generated aerodynamic force contributes to the generation of the compensation moment $M_L$.

Figure 12 depicts the generated relative speed R of the surrounding air between the corresponding attachment arm 5 and said surrounding air enveloping the wind turbine 1 when the wind turbine 1 is moving, at the inlet of the airfoil, i.e., in the area of the leading edge 7, and at the outlet of the airfoil, i.e., in the outlet area 8, $R_{TIN}$ being the tangential component of the relative speed R of the surrounding air at the inlet and $R_{TOUT}$ at the outlet of the airfoil. In Figure 12, the moving element 6.1 is in the lowered position, such that at the outlet, i.e., at the trailing edge 8, the tangential component of the relative speed $R_{TOUT}$ has changed in direction (in this case downward, in the downward direction of the moving element 6.1), and therefore a component $R_L$ is generated in a direction perpendicular to the tangential direction, coinciding with the vertical of the Cartesian system, as depicted in Figure 12. Aerodynamic force L in the opposite direction, in this case a lifting force, is generated by way of reaction. The more the moving element 6.1 moves, the greater the component $R_L$ will be, and therefore the greater the aerodynamic force L generated by way of reaction will be as well, and vice versa.

The magnitude of said aerodynamic force L will therefore depend on the discrete position of the moving element 6.1, where said discrete position can be any position between a maximum position of the elevated position culminating in the maximum travel that the moving element 6.1 may have in the elevated position, and a maximum position of the lowered position culminating in the maximum travel which the moving element 6.1 may have in the lowered position. Therefore, for each rotational speed of the wind turbine 1, the magnitude of the vector of the generated aerodynamic force L can be regulated by controlling the position of the moving element 6.1, thereby being readily adapted to the specific needs of each situation.

When the moving element 6.1 is in the resting position, the surrounding air which is directed along the airfoil surface is not deflected, and therefore no aerodynamic force L parallel to the vertical shaft 4 is generated, and therefore no compensation moment $M_L$ is generated either.

With the wind-powered generator 100 of the invention in use, the blades 3 rotate about the vertical shaft 4 counterclockwise (although the direction of rotation does not change the concept of the invention), where each blade 3 can be arranged in any azimuth position θ between 0° and 360°, with the axis of rotation being the vertical shaft 4. In the context of the invention, an azimuth position refers to an angular position which, in the context of the invention, is measured in the direction of rotation of the wind turbine 1, i.e., counterclockwise.

To better understanding on the invention, azimuth position θ of 0° is defined as that position in which the blades 3 are aligned with the direction of the wind V but such that the leading edge A of the blade 3 is facing said wind V, as shown in Figure 5.

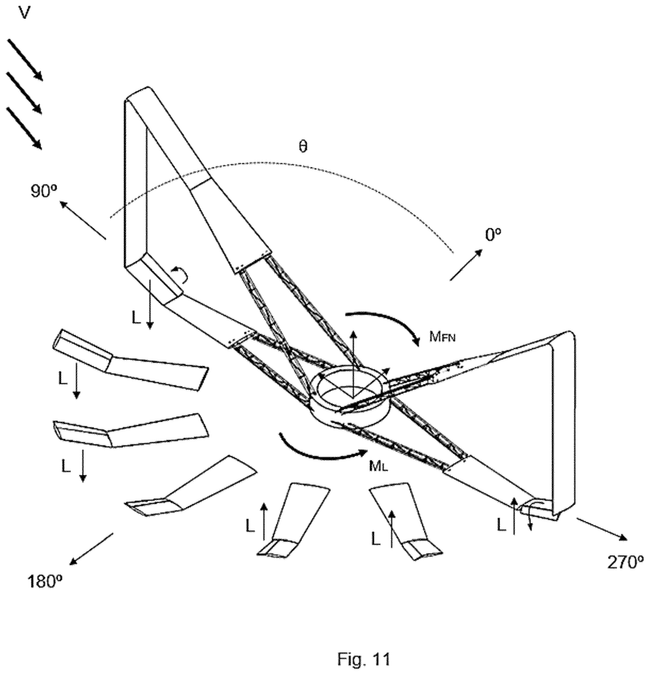

As observed in Figure 11, when the blade 3 associated with a respective compensating device 6 is in an azimuth position of 0° or 180°, the moving element 6.1 is in the resting position. When said blade 3 is in an azimuth position of 90°, i.e., perpendicular to the direction of the wind V, the moving element 6.1 is in a discrete position of the elevated position, preferably in the maximum position of the elevated position, and when said blade 3 is in an azimuth position of 270°, also perpendicular to the direction of the wind V, the moving element 6.1 is in a discrete position of the lowered position, preferably in the maximum position of the lowered position. The moving element 6.1 moves between the resting position and the elevated position when the blade 3 moves counterclockwise in an azimuth range θ of between 0° and 180°, and between the resting position and the lowered position when the blade 3 moves counterclockwise in an azimuth range θ of between 180° and 360°.

More specifically, when the blade 3 moves counterclockwise to transition from an azimuth angle θ of 0° to 90°, the moving element 6.1 moves between the resting position and the elevated position according to an elevating movement of the moving element 6.1, away from the sea surface, when the blade 3 moves counterclockwise to transition from an azimuth angle θ of 90° to 180°, the moving element 6.1 moves between the elevated position and the resting position according to a lowering movement of the moving element 6.1, approaching the sea surface, when the blade 3 moves counterclockwise to transition from an azimuth angle θ of 180° to 270°, the moving element 6.1 moves between the resting position and the lowered position according to a lowering movement of the moving element 6.1, approaching the sea surface, and when the blade 3 moves counterclockwise to transition from an azimuth angle θ of 270° to 360°, the moving element 6.1 moves between the lowered position and the resting position according to an elevating movement of the moving element 6.1, away from the sea surface.

Although the wind-powered generator 100 of the invention can work without the compensating devices 6 of the compensation system being in the resting position, the configuration comprising said resting position is preferred because the operation of the compensation system is made easier since the resting position leads to a transition phase between the elevated and lowered positions.

Each blade 3 can be attached to the vertical shaft 4 through two or more attachment arms 5, as mentioned. In the preferred embodiment of the invention, each blade 3 has associated therewith a single compensating device 6, the corresponding compensating device 6 being arranged in this case in the respective attachment arm 5 of lower height, i.e., the arm 5 arranged closest to the sea surface, which facilitates the tasks of maintaining and repairing the compensating devices 6, in addition to the compensation system benefitting from the aerodynamic efficiency advantages of the ground effect to generate the aerodynamic force L.

In another embodiment not shown in the drawings, each blade 3 can have associated therewith more than one compensating device 6, preferably one for each attachment arm 5, therefore, the compensation system can have as many compensating devices 6 as the wind turbine 1 has attachment arms 5.

In the preferred embodiment of the invention, each blade 3 is attached to each attachment arm 5 holding same, such that it can pivot with respect to each attachment arm 5, where the angle of incidence A of the airfoil of the blade 3 can therefore be varied, which facilitates self-starting of the wind-powered generator 100, i.e., favors the ability of the wind turbine 1 to start working after being stopped.

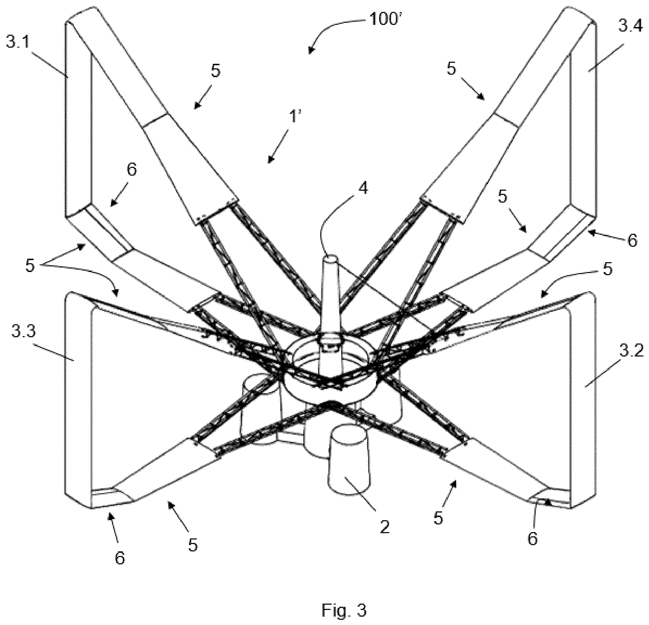

In another embodiment of the invention shown in Figure 3, a wind-powered generator 100' comprising a wind turbine 1' with four blades, referred to with numbers 3.1, 3.2, 3.3, and 3.4, is shown by way of example. Each blade is attached to the vertical shaft 4 through two attachment arms 5, with the compensation device 6 being arranged with its moving element 6.1 in the attachment arm 5 closest to the sea surface. The operation of this wind-powered generator 100' with four blades is similar to the operation of the wind-powered generator with two blades 3 of the preferred embodiment.

## Claims

1. Vertical axis floating offshore wind-powered generator, comprising a wind turbine (1; 1') arranged on a floating platform (2), the wind turbine (1; 1') comprising a plurality of blades (3) rotating about a vertical shaft (4), each blade (3) being attached to the vertical shaft (4) through at least one attachment arm (5), **characterized in that** the floating wind-powered generator (100; 100') also comprises a compensation system which reduces a bending moment ($M_{FN}$) transferred to the floating platform (2) as a result of the force exerted by the wind (V) on the blades (3), the compensation system comprising at least one compensating device (6) associated with a blade (3), each compensating device (6) being arranged in an attachment arm (5), and each compensating device (6) comprising a moving element (6.1), said moving element (6.1) being configured for deflecting part of a surrounding air enveloping the wind turbine (1; 1'), with a compensation moment ($M_L$) being generated on the floating platform (2) which counteracts the bending moment ($M_{FN}$) generated by the force exerted by the wind (V) on the blades (3).

2. Floating offshore wind-powered generator according to claim 1, wherein the moving element (6.1) of the corresponding compensating device (6) is configured for pivoting with respect to a longitudinal axis (X) of the corresponding attachment arm (5).

3. Floating offshore wind-powered generator according to claim 2, wherein the compensating device (6) is arranged in a segment (5.2) of the corresponding attachment arm (5), said segment (5.2) comprising a support (5.1) integral with the rest of the attachment arm (5) and the moving element (6.1), the moving element (6.1) being pivotably attached with said support (5.1).

4. Floating offshore wind-powered generator according to claim 3, wherein the compensating device (6) is arranged at the end of the attachment arm (5) closest to the respective blade (3).

5. Floating offshore wind-powered generator according to claim 3 or 4, wherein at least the segment (5.2) of the attachment arm (5) comprising the compensating device (6) has an airfoil, said airfoil comprising a leading edge (7) and a trailing edge (8), the leading edge (7) being comprised in the support (5.1) of said segment (5.2) and the trailing edge (8) being comprised in the moving element (6.1).

6. Floating offshore wind-powered generator according to claim 5, wherein the attachment arm (5) comprises another segment (5.3) with a structure different from the airfoil, preferably a lattice structure.

7. Floating offshore wind-powered generator according to any of the preceding claims, wherein each blade (3) has associated therewith at least one compensating device (6).

8. Floating offshore wind-powered generator according to any of claims 1 to 7, wherein each blade (3) is attached to the vertical shaft (4) through two or more attachment arms (5), the corresponding compensating device (6) being arranged in the attachment arm (5) closest to the sea surface.

9. Floating offshore wind-powered generator according to claims 1 to 7, wherein each blade (3) is attached to the vertical shaft (4) through two or more attachment arms (5), where each blade (3) can have associated therewith more than one compensating device (6), preferably one for each attachment arm (5).

10. Method for stabilizing a floating platform of a vertical axis floating offshore wind-powered generator, the offshore wind-powered generator (100; 100') comprising a wind turbine (1; 1') arranged on the floating platform (2), the wind turbine (1; 1') comprising a plurality of blades (3) rotating about a vertical shaft (4) driven by the wind (V), each blade (3) being attached to the vertical shaft (4) through at least one attachment arm (5), **characterized in that** the offshore wind-powered generator (100; 100') also comprises a compensating system comprising at least one compensating device (6) associated with a blade (3) comprising a moving element (6.1) arranged in an attachment arm (5), wherein in the method said moving element (6.1) is activated to deflect a surrounding air enveloping the wind turbine (1; 1') and directed along the attachment arm (5) when said attachment arm (5) is rotating about the vertical shaft (4), such that said deflection causes, by way of reaction, an aerodynamic force (L) which generates a compensation moment ($M_L$) on the floating platform (2) which counteracts a bending moment ($M_{FN}$) transferred to the floating platform (2) as a result of the force exerted by the wind (V) on the blades (3).

11. Method according to claim 10, wherein the moving element (6.1) of the corresponding compensating device (6) pivots with respect to a longitudinal axis (X) of the corresponding attachment arm (5), where the moving element (6.1) can be arranged in a resting position in which said moving element (6.1) is aligned with the attachment arm (5), in an elevated position in which the moving element (6.1) can be arranged in a discrete position between the resting position and a maximum elevated position, with the moving element (6.1) moving away from the sea surface in said elevated position, projecting above the attachment arm (5), and in a lowered position in which the moving element (5) can be arranged in a discrete position between the resting position and a maximum lowered position, with the moving element (6.1) moving closer towards the sea surface in said lowered position, projecting below the attachment arm (5).

12. Method according to claim 11, wherein when the blade (3) associated with a respective compensating device (6) is in an azimuth position (θ) of 0° or 180°, in which the blade (3) is arranged aligned with the direction of the wind (V), the moving element (6.1) is in the resting position, when the blade (3) is in an azimuth position (θ) of 90°, i.e., perpendicular to the direction of the wind (V), the moving element (6.1) is in a discrete position of the elevated position, preferably in the maximum position of the elevated position, and when the blade (3) is in an azimuth position (θ) of 270°, also perpendicular to the direction of the wind (V), the moving element (6.1) is in a discrete position of the lowered position, preferably in the maximum position of the lowered position, with the moving element (6.1) moving between the resting position and the elevated position when the blade (3) moves counterclockwise in an azimuth range (θ) of between 0° and 180°, and with the moving element (6.1) moving between the resting position and the lowered position when the blade (3) moves counterclockwise in an azimuth range (θ) of between 180° and 360°.

13. Method according to claim 12, wherein when the blade (3) moves counterclockwise to transition from an azimuth angle (θ) of 0° to 90°, the moving element (6.1) moves between the resting position and the elevated position according to an elevating movement of the moving element (6.1) away from the sea surface, when the blade (3) moves counterclockwise to transition from an azimuth angle (θ) of 90° to 180°, the moving element (6.1) moves between the elevated position and the resting position according to a lowering movement of the moving element (6.1) approaching the sea surface, when the blade (3) moves counterclockwise to transition from an azimuth angle (θ) of 180° to 270°, the moving element (6.1) moves between the resting position and the lowered position according to a lowering movement of the moving element (6.1) approaching the sea surface, and when the blade (3) moves counterclockwise to transition from an azimuth angle (θ) of 270° to 360°, the moving element (6.1) moves between the lowered position and the resting position according to an elevating movement of the moving element (6.1) away from the sea surface.

14. Method according to any of claims 10 to 13, wherein each compensating device (6) is arranged in a segment (5.2) of the attachment arm (5), said segment (5.2) preferably being arranged at the end of the attachment arm (5) closest to the blade (3) with which it is associated, and at least said segment (5.2) comprising an airfoil, said airfoil comprising a leading edge (7) and a trailing edge (8), the trailing edge (8) being comprised in the moving element (6.1).

15. Method according to any of claims 10 to 14, wherein the compensating device (6) associated with a respective blade (3) is arranged in the attachment arm (5) closest to the sea surface associated with said blade (3).

Fig. 1

Fig. 2

Fig. 3

Fig. 4

V

FT₁

0°

θ

90° 270°

FN₁ FN₂

180°

FT₂

Fig. 5

V

h

h/2

FN₁ FN₂

M_FN

$M_{FN} = F_{N1} * h/2 + F_{N2} * h/2$

Fig. 6

$$M_L = L_1 * r + L_2 * r$$

Fig. 7

Fig. 8

Fig. 9

Fig. 10A

Fig. 10B

Fig. 10C

Fig. 11

Fig. 12

Europäisches
Patentamt

European
Patent Office

Office européen
des brevets

# EUROPEAN SEARCH REPORT

Application Number

EP 22 38 2555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 837 426 B2 (CONTINUUM DYNAMICS INC [US]) 17 November 2020 (2020-11-17) | 1,2,7-9 | INV. F03D3/06 F03D13/25 |
| Y | * column 7, line 63 - line 67 * * column 3, line 60 - column 4, line 32 * * figures 1,4 * * claims 1-6 * | 3-6,14 | |
| Y | CN 107 842 462 A (UNIV DALIAN TECH) 27 March 2018 (2018-03-27) * figures 1,2 * * paragraph [0011] - paragraph [0012] * | 3-6,14 | |
| A | WO 2019/190387 A1 (MAGNUS RAHM ENERGY CONSULTING AB [SE]) 3 October 2019 (2019-10-03) * claims 1-3,5,18 * * page 7, line 27 - page 8, line 11 * * figure 1 * | 1-9 | |
| A | WO 2019/201703 A1 (CENTRE NAT RECH SCIENT [FR]; INST POLYTECHNIQUE GRENOBLE [FR]) 24 October 2019 (2019-10-24) * page 4, line 25 - line 33 * * page 5, line 1 - line 15 * * page 6, line 30 - line 33 * * figures 2a, 2c * | 1-9 | TECHNICAL FIELDS SEARCHED (IPC) B63B F03D |
| A | GB 2 281 761 A (CHAPMAN MICHAEL JOHN LEIGH [GB]) 15 March 1995 (1995-03-15) * page 2, paragraph 1 - paragraph 2 * * page 6, paragraph 3 - page 7, paragraph 4 * * figures 3,5 * | 1-9 | |

The present search report has been drawn up for all claims

| Place of search | Date of completion of the search | Examiner |
|---|---|---|
| The Hague | 9 November 2022 | Pasquet, Pierre |

EPO FORM 1503 03.82 (P04C01)

## ANNEX TO THE EUROPEAN SEARCH REPORT
## ON EUROPEAN PATENT APPLICATION NO.

EP 22 38 2555

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2022

| Patent document cited in search report | | Publication date | Patent family member(s) | | Publication date |
|---|---|---|---|---|---|
| US 10837426 | B2 | 17-11-2020 | US | 2017067449 A1 | 09-03-2017 |
| | | | US | 2019316567 A1 | 17-10-2019 |
| | | | US | 2020224639 A1 | 16-07-2020 |
| | | | US | 2021040938 A1 | 11-02-2021 |
| | | | US | 2021048002 A1 | 18-02-2021 |
| CN 107842462 | A | 27-03-2018 | NONE | | |
| WO 2019190387 | A1 | 03-10-2019 | SE | 1850355 A1 | 29-09-2019 |
| | | | WO | 2019190387 A1 | 03-10-2019 |
| WO 2019201703 | A1 | 24-10-2019 | FR | 3080412 A1 | 25-10-2019 |
| | | | TW | 201945640 A | 01-12-2019 |
| | | | WO | 2019201703 A1 | 24-10-2019 |
| GB 2281761 | A | 15-03-1995 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107842462 A